# EUROPÄISCHE PATENTSCHRIFT

(11) **EP 2 338 255 B1**
(45) Veröffentlichungstag und Bekanntmachung des Hinweises auf die Patenterteilung: **05.04.2017**
(21) Anmeldenummer: 09782626.7
(22) Anmeldetag: 04.09.2009
(51) Int. Cl.: H04L 29/06, H04L 12/22, G06F 21/34, H04L 9/32

(54) **VERFAHREN, COMPUTERPROGRAMMPRODUKT UND SYSTEM ZUR AUTHENTIFIZIERUNG EINES BENUTZERS EINES TELEKOMMUNIKATIONSNETZWERKES**
METHOD, COMPUTER PROGRAM PRODUCT AND SYSTEM FOR AUTHENTICATING A USER OF A TELECOMMUNICATIONS NETWORK
MÉTHODE, PRODUIT LOGICIEL ET SYSTÈME D'AUTHENTIFICATION D'UN UTILISATEUR D'UN RÉSEAU DE TÉLÉCOMMUNICATION

(30) Priorität: 22.09.2008 DE 102008042262; 02.10.2008 DE 102008042582
(43) Veröffentlichungstag der Anmeldung: 29.06.2011
(73) Patentinhaber: Bundesdruckerei GmbH, 10958 Berlin (DE)
(72) Erfinder: DIETRICH, Frank, 12437 Berlin (DE); PAESCHKE, Manfred, 16348 Wandlitz (DE); FIEDLER, Robert, 13088 Berlin (DE)
(74) Vertreter: Richardt Patentanwälte PartG mbB
(86) Internationale Anmeldenummer: PCT/EP2009/061476
(87) Internationale Veröffentlichungsnummer: WO 2010/031700

(56) Entgegenhaltungen:
- EP-A1- 1 802 155
- DE-A1- 10 306 338

## Beschreibung

Die Erfindung betrifft ein Telekommunikationsverfahren, ein Computerprogrammprodukt und ein Computersystem.

Aus dem Stand der Technik sind verschiedene Verfahren zur Verwaltung der so genannten digitalen Identität eines Benutzers bekannt:

Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

In der zum Anmeldezeitpunkt unveröffentlichten Patentanmeldung DE 2008000067.1-31 derselben Anmelderin ist ein Verfahren zum Lesen zumindest eines in einem ID-Token gespeicherten Attributs offenbart, wobei sowohl eine Authentifizierung des Nutzers als auch eines Computersystems gegenüber dem ID-Token erforderlich ist, um einen Lesezugriff auf ein in den ID-Token gespeichertes Attribut zu ermöglichen, sodass dieses an ein Computersystem zur Erbringung eines Dienstes weitergeleitet werden kann.

In der zum Anmeldezeitpunkt unveröffentlichten Patentanmeldung DE 2008042262.2 derselben Anmelderin ist ein Verfahren zur Speicherung von Daten in einem ID-Token offenbart, wobei eine Voraussetzung für das Schreiben der Daten in den ID-Token über eine Verbindung ist, dass eine weitere Verbindung zu einem weiteren ID-Token existent ist, wobei beide Verbindungen eine Ende-zu-Ende-Verschlüsselung haben und nach einem verbindungsorientierten Protokoll arbeiten.

Aus US 2003/0023858 A1 ist ein Verfahren zur Generierung eines Datensatzes bekannt, der als elektronischer Reisepass dienen soll. Der Datensatz wird von einem Nutzer heruntergeladen und zum Beispiel auf einem Mobiltelefon gespeichert.

Aus EP 1 802 155 A1 ist ein Verfahren zur Authentifizierung eines Nutzers bekannt. Hierbei wird eine Authentifizierungsanfrage zu einem entfernten Authentifizierungsgerät gesendet, welches einen ersten Teil einer Authentifizierungsinformation erzeugt. Ein mobiles Gerät empfängt den ersten Teil der Authentifizierungsinformation entweder von einem Zugangsterminal oder von dem entfernten Authentifizierungsgerät. Das mobile Gerät des Nutzers erzeugt einen zweiten Teil einer Authentifizierungsinformation, welche zumindest teilweise auf dem ersten Teil der Authentifizierungsinformation beruht. Der zweite Teil der Authentifizierungsinformation wird an entfernte Authentifizierungsgeräte gesendet und validiert. Wenn der zweite Teil der Authentifizierungsinformationen erfolgreich validiert wurde, wird ein Authentifizierungssignal erzeugt.

Aus DE 103 06 338 A1 ist ein Verfahren zum geschützten Zugang bekannt. Hierbei gibt ein Nutzer zunächst über seinen Personalcomputer und einen Kommunikationsweg wie einem Internetzugang seinen Usernamen und sein Passwort gegenüber einem Server an, welcher die Überprüfung der Anmeldedaten vornimmt. Der Server generiert ein zusätzliches Passwort (SecurePW), welches nur ein einziges Mal und optional nur eine begrenzte Zeit gültig ist. Dieses Passwort versendet der Server direkt als SMS an ein Mobilfunktelefon, dessen Anschlussnummer beim Server für den Usernamen gespeichert ist. Ist der Nutzer identisch mit dem Inhaber der Mobilfunktelefonnummer, erhält er das Einmalpasswort in der SMS und kann dieses nun an den Server übermitteln. Wenn alle Nutzerangaben stimmen, erhält der Nutzer den gewünschten Zugang.
Der Erfindung liegt demgegenüber die Aufgabe zugrunde, ein verbessertes Telekommunikationsverfahren zu schaffen sowie ein entsprechendes Computerprogrammprodukt und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach Ausführungsformen der Erfindung wird ein Telekommunikationsverfahren geschaffen, welches die folgenden Schritte beinhaltet: Zwischen einem ersten ID-Token und einem ersten Computersystem wird über ein zweites Computersystem eine erste Verbindung aufgebaut. Bei dem ersten ID-Token kann es sich zum Beispiel um ein Dokument, insbesondere ein Wert- oder Sicherheitsdokument, insbesondere ein Ausweisdokument, wie zum Beispiel einen elektronischen Personalausweis handeln.

Das erste ID-Token hat einen elektronischen Speicher, in dem zumindest ein erstes Attribut gespeichert ist. Über das erste Attribut kann das erste ID-Token einer Person eindeutig zugeordnet sein. Je nach Ausführungsform können auch mehrere solcher erster Attribute für die eindeutige Zuordnung erforderlich sein.

Bei dem ersten Computersystem kann es sich zum Beispiel um ein Server-Computersystem eines ID-Providers handeln, wobei hier unter einem ID-Provider eine vertrauenswürdige Instanz verstanden wird. Beispielsweise befindet sich das erste Computersystem in einem sogenannten Trust-Center.

Bei dem zweiten Computersystem kann es sich um einen Personalcomputer des Nutzers handeln, der mit dem ersten Computersystem über ein Netzwerk, wie zum Beispiel das Internet, verbunden ist. Das zweite Computersystem kann ein integriertes oder externes Lesegerät für den ersten ID-Token aufweisen, wobei die Schnittstelle zwischen dem Lesegerät und dem ersten ID-Token kontaktbehaftet oder kontaktlos ausgebildet sein kann, insbesondere als Funk-Schnittstelle, die beispielsweise nach einem RFID-Verfahren arbeitet.

Das erste Computersystem liest über die erste Verbindung das erste Attribut aus dem ersten ID-Token aus. Das erste Computersystem generiert dann einen ersten Soft-Token, der das erste Attribut und eine Zeitangabe beinhaltet. Unter einem "Soft-Token" wird hier ein Datensatz mit einer digitalen Signatur verstanden. Der erste Soft-Token ist von dem ersten Computersystem signiert.

Bei der Zeitangabe kann es sich um einen geplanten Sendezeitpunkt zum Senden des ersten Soft-Tokens von dem ersten Computersystem an ein drittes Computersystem oder eine Gültigkeitsdauer handeln. Die Sendung des ersten Soft-Tokens von dem ersten Computersystem an das dritte Computersystem kann dabei unmittelbar an das dritte Computersystem erfolgen oder über das zweite Computersystem, von wo aus der erste Soft-Token dann an das dritte Computersystem weitergeleitet wird.

Im letzteren Fall kann das zweite Computersystem so ausgebildet sein, dass der Nutzer das zumindest eine in dem ersten Soft-Token beinhaltete erste Attribut zur Kenntnis nehmen kann, ohne das zumindest erste Attribut zu verändern, wobei die Weiterleitung des ersten Soft-Tokens von dem zweiten Computersystem an das dritte Computersystem erst nach Genehmigung des Nutzers erfolgt. Dies hat den Vorteil, dass sich der Nutzer von dem korrekten Inhalt des ersten Soft-Tokens Gewissheit verschaffen kann und dass dem Nutzer ferner mitgeteilt wird, welche seiner Attribute an das dritte Computersystem gesendet werden sollen.

Bei der ersten Verbindung, über die das erste Attribut von dem ersten Computersystem aus dem ersten ID-Token ausgelesen wird, handelt es sich um eine Verbindung mit Ende-zu-Ende-Verschlüsselung, sodass durch den Nutzer des zweiten Computersystems, über welches die Verbindung aufgebaut wird, keine Manipulationen, wie zum Beispiel Veränderungen des ersten Attributs, vorgenommen werden können.

Ausführungsformen der Erfindung sind besonders vorteilhaft, da das Senden des ersten Attributs in Form des ersten Soft-Tokens von dem ersten Computersystem eine flexible, bequeme, mit relativ geringem Aufwand implementierbare und gleichzeitig sehr sichere Art der vertrauenswürdigen Zurverfügungstellung des in dem ersten ID-Token gespeicherten zumindest ersten Attributs in einem Netzwerk ermöglicht.

Durch die in dem ersten Soft-Token beinhaltete Zeitangabe kann die Zeitdauer für die Verwendbarkeit des ersten Soft-Tokens durch ein Empfängersystem, wie zum Beispiel das dritte Computersystem, begrenzt sein. Insbesondere kann es sich bei der Zeitangabe um die Angabe einer zukünftigen Zeit handeln, bis zu der das erste Soft-Token als vertrauenswürdig angesehen werden kann. Bei der Zeitangabe kann es sich auch um den Zeitpunkt der Generierung des ersten Soft-Tokens oder um den Zeitpunkt der Versendung des ersten Soft-Tokens von dem ersten Computersystem handeln.

Durch diese Zeitangabe werden insbesondere sogenannte Replay-Attacken unterbunden. Wird nämlich das erste Soft-Token bei seiner Übertragung von dem ersten Computersystem an das dritte Computersystem über ein Netzwerk abgefangen, um hiervon eine Kopie zu erhalten, so ist dennoch eine Replay-Attacke praktisch nicht möglich, da diese eine gewisse Zeit erfordert. Nach Ablauf der für eine Replay-Attacke erforderlichen Zeit hat aber das erste Soft-Token bereits seine Gültigkeitsdauer überschritten, welche durch die in dem ersten Soft-Token beinhaltete Zeitangabe spezifiziert ist.

Nach einer Ausführungsform der Erfindung handelt es sich bei der Zeitangabe um eine absolute Zeit, wie zum Beispiel eine Angabe der Zeit als koordinierte Weltzeit (UTC).

Nach einer Ausführungsform der Erfindung beinhalten das erste Computersystem und das dritte Computersystem jeweils Zeitgeber, die miteinander synchronisiert sind. Die Zeitangabe kann dann eine Systemzeit der Computersysteme sein.

Bei dem dritten Computersystem kann es sich um ein Server-Computersystem handeln, welches mit dem ersten und/oder dem zweiten Computersystem über das Netzwerk verbunden ist. Bei dem dritten Computersystem kann es sich um ein Server-Computersystem eines Diensteerbringers handeln, welches im Weiteren auch als Dienst-Computersystem bezeichnet wird.

Vorzugsweise werden die ersten Attribute von dem ersten Computersystem an das dritte Computersystem unmittelbar nach dem Auslesen aus dem ersten ID-Token als erstes Soft-Token weitergeleitet, sodass das erste Attribut von dem ersten Computersystem nicht permanent gespeichert zu werden braucht. Es reicht dagegen aus, das erste Attribut in dem ersten Computersystem nur so lange zu speichern, wie es erforderlich ist, um das erste Attribut an das dritte Computersystem weiterzuleiten, nachdem es aus dem ersten ID-Token ausgelesen worden ist. Eine für die Zwecke der Weiterleitung des ersten Attributs von dem ersten Computersystem an das dritte Computersystem eventuell erforderliche temporäre Kopie wird von dem ersten Computersystem unmittelbar nach dem Senden gelöscht. Dies hat den Vorteil, dass das erste Computersystem zustandslos ausgebildet sein kann, und dass schutzbedürftige Daten, welche die ersten Attribute beinhalten können, nicht von dem ersten Computersystem gesammelt werden.

Nach einer Ausführungsform der Erfindung baut das dritte Computersystem eine zweite Verbindung zu einem zweiten ID-Token über das zweite Computersystem auf, um aus dem zweiten ID-Token zumindest ein zweites Attribut auszulesen. Bei dieser zweiten Verbindung handelt es sich wiederum um eine Verbindung mit Endezu-Ende-Verschlüsselung.

Das dritte Computersystem verwendet die ersten und zweiten Attribute zur Ermittlung von Daten. Dies kann so erfolgen, dass das dritte Computersystem aus den ersten und zweiten Attributen die Daten berechnet oder durch Zugriff auf eine Datenbank mit Hilfe der ersten und zweiten Attribute die Daten aus einer Datenbank abfragt.

Das dritte Computersystem schreibt dann Daten in den zweiten ID-Token über die zweite Verbindung, um die Daten in dem zweiten ID-Token zu speichern.

Voraussetzung für das Schreiben der Daten von dem dritten Computersystem in den zweiten ID-Token ist, dass der erste Soft-Token von dem dritten Computersystem zu einem Empfangszeitpunkt empfangen worden ist, zu dem der erste Soft-Token noch gültig war. Die Gültigkeit des ersten Soft-Tokens wird von dem dritten Computersystem je nach Ausführungsform beispielsweise so geprüft, dass die in dem ersten Soft-Token angegebene maximalen Gültigkeit mit der Zeitbasis des dritten Computersystems verglichen wird oder indem eine Differenz aus der in dem ersten Soft-Token angegebenen Sendezeit und der Empfangszeit berechnet und mit einem Stellwert verglichen wird. Hierdurch können insbesondere sogenannte Replay-Attacken abgewehrt werden.

Ausführungsformen der Erfindung sind besonders vorteilhaft, da es die Erfindung ermöglicht, den zweiten ID-Token mit dokumentenindividuellen Daten sicher zu beschreiben, wobei der erste ID-Token als "Vertrauensanker" dient. Der Inhaber des ersten ID-Tokens wird dadurch in die Lage versetzt, seinen zweiten ID-Token mit dokumentenindividuellen Daten erstmals beschreiben zu lassen oder solche dokumentenindividuellen Daten zu aktualisieren, und zwar online, ohne dass der Inhaber des ersten ID-Tokens zum Beispiel eine Behörde persönlich aufsuchen muss.

Beispielsweise ist der erste ID-Token dem autorisierten Nutzer, d.h. dem Inhaber des ID-Tokens, zugeordnet. Zum Beispiel handelt es sich bei dem ersten ID-Token um einen elektronischen Personalausweis. Der zweite ID-Token kann dagegen einer Sache zugeordnet sein, wie zum Beispiel einem Kraftfahrzeug. Beispielsweise handelt es sich bei dem zweiten ID-Token um einen elektronischen Kraftfahrzeugbrief oder einen elektronischen Kraftfahrzeugschein. Die Erfindung ermöglich es, den elektronischen Kraftfahrzeugbrief oder Kraftfahrzeugschein online zu aktualisieren, wenn sich zum Beispiel der Halter des Kraftfahrzeugs und/oder das amtliche Kennzeichen des Kraftfahrzeugs ändern.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung zumindest eines Attributs integriert ist.

Ausführungsformen der Erfindung sind besonders vorteilhaft, da die erste Verbindung abgebrochen werden kann, nachdem das zumindest eine erste Attribut aus dem ersten ID-Token ausgelesen worden ist. Der Aufbau der zweiten Verbindung kann nach dem Abbruch der ersten Verbindung erfolgen. Dies hat den Vorteil, dass nicht die ersten und zweiten Verbindungen parallel aufrechterhalten werden müssen, was entweder zwei Lesegeräte oder ein Lesegerät, welches gleichzeitig zwei Verbindungen zu den ersten bzw. zweiten ID-Token herstellen kann, erfordern würde. Ausführungsformen der Erfindung ermöglichen es dagegen, dass das zweite Computersystem nur ein einfaches Lesegerät aufweist, welches nur eine Verbindung zu einem der ID-Token herstellen kann, also nicht die gleichzeitige Herstellung von zwei Verbindungen ermöglicht.

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung hat das erste Computersystem zumindest ein Zertifikat, welches zur Authentifizierung des ersten Computersystems gegenüber dem ersten ID-Token verwendet wird. Das Zertifikat beinhaltet eine Angabe derjenigen Attribute, für welche das erste Computersystem eine Leseberechtigung hat. Der erste ID-Token prüft anhand dieses Zertifikats, ob das erste Computersystem die erforderliche Leseberechtigung für den Lesezugriff auf das erste Attribut hat, bevor ein solcher Lesezugriff durch das erste Computersystem durchgeführt werden kann.

Nach einer Ausführungsform der Erfindung sendet das erste Computersystem das erste Soft-Token unmittelbar an das dritte Computersystem. Bei dem dritten Computersystem kann es sich zum Beispiel um einen Server einer Behörde, wie z.B. einer Kraftfahrzeug-Meldestelle handeln.

Nach einer Ausführungsform der Erfindung erfolgt die Übertragung des ersten Soft-Tokens von dem ersten Computersystem zunächst an das zweite Computersystem des Nutzers. Beispielsweise hat das zweite Computersystem einen üblichen Internetbrowser, mit dem der Nutzer eine Webseite des dritten Computersystems öffnen kann. Der Nutzer kann in die Webseite eine Anforderung für einen Dienst, wie z.B. die Aktualisierung seines elektronischen Kraftfahrzeugscheins, eingeben.

Das dritte Computersystem spezifiziert daraufhin diejenigen Attribute, zum Beispiel des Nutzers und/oder seines ersten ID-Tokens, welche es für die Erbringung des Dienstes benötigt. Die entsprechende Attributspezifikation, die die Spezifizierung dieser Attribute beinhaltet, wird sodann von dem dritten Computersystem an das erste Computersystem gesendet. Dies kann mit oder ohne Zwischenschaltung des zweiten Computersystems erfolgen. Im letzteren Fall kann der Nutzer das gewünschte erste Computersystem gegenüber dem dritten Computersystem spezifizieren, beispielsweise durch Eingabe der URL des ersten Computersystems in eine Webseite des dritten Computersystems von dem zweiten Computersystem aus. Das erste Computersystem kann aber auch von dem dritten Computersystem fest vorgegeben sein.

Nach einer Ausführungsform der Erfindung beinhaltet die Dienst-Anforderung des Nutzers an das dritte Computersystem die Angabe eines Identifikators, wobei der Identifikator das erste Computersystem identifiziert. Beispielsweise handelt es sich bei dem Identifikator um einen Link, beispielsweise eine URL des ersten Computersystems.

Nach einer Ausführungsform der Erfindung wird die Attributspezifizierung nicht unmittelbar von dem dritten Computersystem an das erste Computersystem gesendet, sondern zunächst von dem dritten Computersystem an das zweite Computersystem.

Nach einer Ausführungsform der Erfindung hat das erste Computersystem mehrere Zertifikate mit verschiedenen Leserechten. Aufgrund des Empfangs der Attributspezifikation wählt das erste Computersystem eines oder mehrere dieser Zertifikate aus, um die entsprechenden Attribute aus dem ersten ID-Token auszulesen.

Nach einer Ausführungsform der Erfindung handelt es sich bei dem ID-Token um einen elektronischen Fahrzeugbrief, der nur einem Kraftfahrzeug, nicht aber einem Nutzer fest zugeordnet ist. Eine Authentifizierung des Nutzers gegenüber dem ID-Token kann dann entfallen.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, kann es ja nach Ausführungsform erforderlich sein, dass sich auch der Nutzer gegenüber dem ID-Token authentifiziert. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen der Attribute, ablaufen können.

Nach einer Ausführungsform der Erfindung hat der ID-Token Mittel für eine Ende-zu-Ende-Verschlüsselung. Dies ermöglicht es, die Verbindung zwischen dem ID-Token und dem ersten Computersystem über ein drittes Computersystem des Nutzers aufzubauen, da der Nutzer aufgrund der Ende-zu-Ende-Verschlüsselung keine Änderungen der über die Verbindung übertragenen Daten vornehmen kann.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

In einem weiteren Aspekt betrifft die Erfindung ein Computersystem zur Durchführung eines erfindungsgemäßen Verfahrens.

Nach einer Ausführungsform der Erfindung hat das Computersystem Mittel zur Generierung eines zweiten Soft-Tokens, wobei der zweite Soft-Token zumindest das zweite Attribut beinhaltet, und wobei der zweite Soft-Token an das zweite Computersystem gesendet wird.

In einem weiteren Aspekt betrifft die Erfindung ein Telekommunikationsverfahren mit folgenden Schritten: Empfang eines ersten Soft-Tokens zu einem Empfangszeitpunkt, wobei der erste Soft-Token von einem ersten Computersystem signiert ist und zumindest ein erstes Attribut und eine Zeitangabe beinhaltet, Aufbau einer zweiten Verbindung über ein zweites Computersystem zu einem zweiten ID-Token zum Auslesen zumindest eines zweiten Attributs aus dem zweiten ID-Token, Ermittlung von Daten mit Hilfe der ersten und/oder zweiten Attribute, Schreiben der Daten über die zweite Verbindung, um die Daten in dem zweiten ID-Token zu speichern, wobei es sich bei der zweiten Verbindung um eine Verbindung mit Ende-zu-Ende-Verschlüsselung handelt, und wobei das Schreiben der Daten über die zweite Verbindung nur dann erfolgt, wenn der erste Soft-Token zu dem Empfangszeitpunkt gültig ist, wobei die Gültigkeit anhand der Zeitangabe geprüft wird.

Nach einer Ausführungsform der Erfindung wird bei dem Telekommunikationsverfahren zum Aufbau der zweiten Verbindung eine Authentifizierung des dritten Computersystems gegenüber dem zweiten ID-Token durchgeführt, wobei die Authentifizierung des dritten Computersystems gegenüber dem zweiten ID-Token mit Hilfe eines Zertifikats des dritten Computersystems erfolgt, wobei das Zertifikat eine Angabe derjenigen in dem zweiten ID-Token gespeicherten Attribute beinhaltet, für welche das dritte Computersystem für den Lesezugriff berechtigt ist, wobei das zweite ID-Token die Leseberechtigung des dritten Computersystems für den Lesezugriff auf zumindest das zweite Attribut mit Hilfe des Zertifikats überprüft.

Nach einer Ausführungsform der Erfindung beinhaltet das Zertifikat eine Spezifizierung der Schreib- und Leserechte des dritten Computersystems zum Lesen der zweiten Attribute und zum Schreiben der Daten in den zweiten ID-Token, wobei der zweite ID-Token die Schreibberechtigung des dritten Computersystems für den Schreibzugriff zum Schreiben der Daten mit Hilfe des Zertifikats überprüft.

Im Weiteren werden Ausführungsformen der Erfindung mit Bezugnahme auf die Zeichnungen näher erläutert. Es zeigen:
- Figur 1: ein Blockdiagramm einer Ausführungsform erfindungsgemäßer Computersysteme und ID-Token,
- Figur 2: ein Flussdiagramm einer Ausführungsform eines erfindungsgemäßen Verfahrens,
- Figur 3: ein UML-Diagramm einer weiteren Ausführungsform eines erfindungsgemäßen Verfahrens,
- Figur 4: ein UML-Diagramm einer weiteren Ausführungsform eines erfindungsgemäßen Verfahrens,
- Figur 5: ein Blockdiagramm einer weiteren Ausführungsform erfindungsgemäßer Computersysteme und ID-Token.

Elemente der nachfolgenden Ausführungsformen, die einander entsprechen, werden mit denselben Bezugszeichen gekennzeichnet.

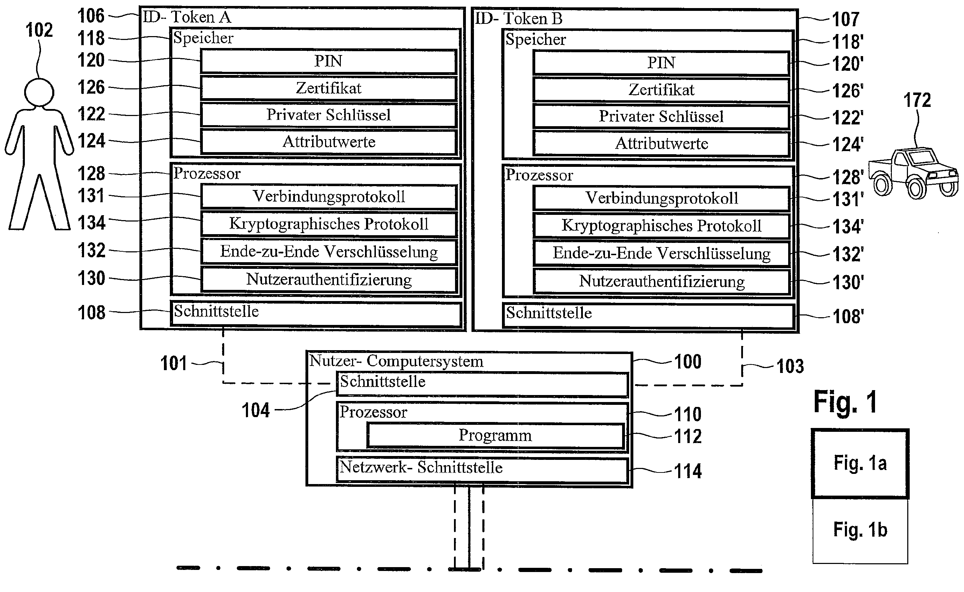

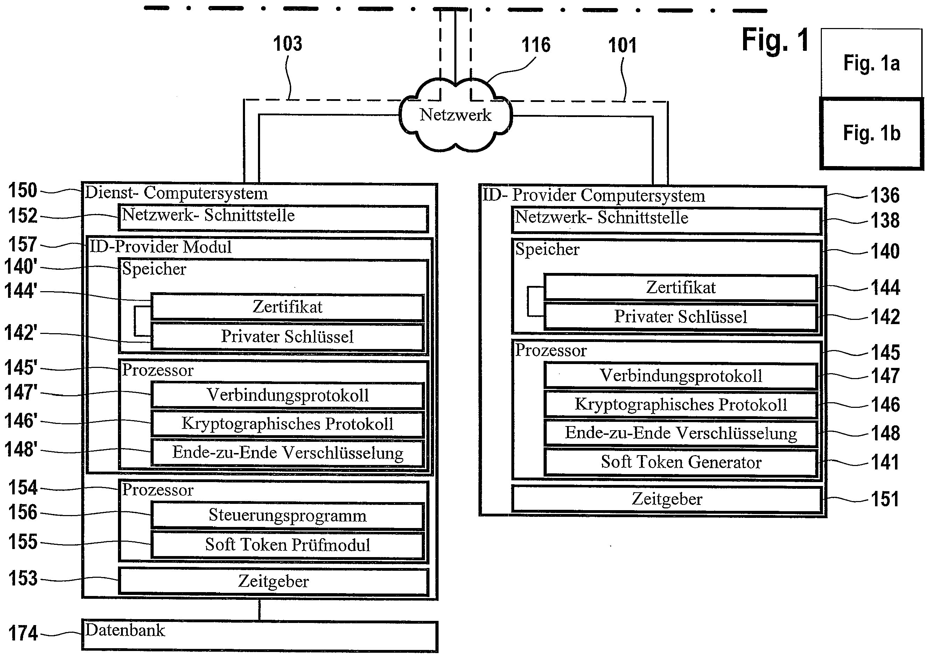

Die Figur 1 zeigt ein Blockdiagramm einer Ausführungsform eines erfindungsgemäßen Datenverarbeitungssystems. Das Datenverarbeitungssystem hat ein Nutzer-Computersystem 100. Bei dem Nutzer-Computersystem 100 kann es sich um einen PC, einen tragbaren Computer, wie zum Beispiel einen Laptop oder Palmtop Computer, einen Personal Digital Assistant (PDA), ein mobiles Telekommunikationsgerät, insbesondere ein Smartphone, oder dergleichen handeln.

Das Nutzer-Computersystem 100 dient zur Kommunikation mit dem ID-Token A 106 und dem ID-Token B 107. Die Kommunikation zwischen den ID-Token A und B einerseits und dem Nutzer-Computersystem 100 andererseits kann kontaktbehaftet oder kontaktlos, insbesondere nach einem RFID-Verfahren, erfolgen. Bei dem ID-Token A kann es sich um einen elektronischen Personalausweis handeln, d.h. einen Personalausweis, welcher einen RFID-Chip beinhaltet, in dem Attribute des Nutzers gespeichert sind.

Der ID-Token B kann prinzipiell so aufgebaut sein wie der ID-Token A, wobei der ID-Token B nicht dem Nutzer, sondern einer Sache, wie zum Beispiel einem Kraftfahrzeug, zugeordnet ist. Beispielsweise handelt es sich bei dem ID-Token B um einen elektronischen Kraftfahrzeugbrief oder einen elektronischen Kraftfahrzeugschein, in dem in dem Attribute des Kraftfahrzeugs gespeichert sind.

An das Nutzer-Computersystem 100 ist ein geeignetes Lesegerät (in der Figur 1 nicht dargestellt) angeschlossen oder in das Nutzer-Computersystem 100 integriert, sodass das Nutzer-Computersystem 100 mit den ID-Token A und B kommunizieren kann. Das Lesegerät ist dabei so ausgebildet, dass eine erste Verbindung A 101 zwischen dem ID-Token A und dem Nutzer-Computersystem 100 sowie eine zweite Verbindung B 103 zwischen dem ID-Token B und dem Nutzer-Computersystem 100 bestehen kann. Die ersten und zweiten Verbindungen müssen dabei nicht gleichzeitig herstellbar sein, sondern es ist ausreichend, dass die Verbindungen nacheinander herstellbar sind.

In dem ID-Token B ist zumindest ein Attribut gespeichert, welches die Zuordnung des ID-Tokens B zu der Sache, beispielsweise zu dem Kraftfahrzeug, herstellt. Bei diesem Attribut kann es sich um einen sogenannten Unique Identifier der Sache handeln, wie zum Beispiel die Fahrgestellnummer des Kraftfahrzeugs oder dergleichen.

Das Nutzer-Computersystem 100 ist über ein Netzwerk 116, wie zum Beispiel das Internet, mit einem Dienst-Computersystem 150 verbunden. Bei dem Dienst-Computersystem 150 kann es sich um ein Server-Computersystem einer Behörde, wie zum Beispiel einer Kraftfahrzeugmeldestelle handeln.

Ferner ist das Nutzer-Computersystem 100 über das Netzwerk 116 mit dem ID-Provider-Computersystem 136 verbunden. Das ID-Provider-Computersystem 136 dient zum Lesen der ersten Attribute A aus den ID-Token A und zur Weiterleitung dieser Attribute A an das Dienst-Computersystem 150.

Wenn sich zum Beispiel aufgrund eines Umzugs des Nutzers das amtliche Kennzeichen von dessen Kraftfahrzeug ändert, so kann der ID-Token B mit dem neuen amtlichen Kennzeichen wie folgt aktualisiert werden, ohne dass der Nutzer hierzu eine Behörde aufsuchen muss.

Zwischen dem ID-Token A und dem ID-Provider-Computersystem 136 wird eine erste Verbindung A 101 aufgebaut. Bei der Verbindung 101 handelt es sich um eine Verbindung mit Ende-zu-Ende-Verschlüsselung, sodass die über die Verbindung 101 ausgetauschten Daten weder von dem Nutzer-Computersystem 100 noch von anderen Teilnehmern des Netzwerks 116 entschlüsselt werden können.

Das ID-Provider-Computersystem 136 liest über die Verbindung 101 zumindest ein erstes Attribut A aus dem ID-Token A aus oder mehrere solcher Attribute A, durch welche der Nutzer eindeutig identifiziert wird. Beispielsweise kann es sich hierbei um den Namen, das Geburtsdatum und den Wohnort des Nutzers handeln.

Die Attribute A und eine Zeitangabe werden von dem ID-Provider-Computersystem 136 digital signiert und als erster Soft-Token und an das Dienst-Computersystem 150 weitergeleitet. Dies erfolgt vorzugsweise so, dass das ID-Provider-Computersystem 136 keine Kopie der Attribute A zurückbehält, nachdem der erste Soft-Token an das Dienst-Computersystem 150 gesendet worden ist.

Ebenso wird hinsichtlich des zweiten Attributs B, welches in dem ID-Token B gespeichert ist, vorgegangen: Zwischen dem ID-Token B und dem Dienst-Computersystem 150 wird eine zweite Verbindung B 103 aufgebaut. Bei der Verbindung 103 handelt es sich um eine Verbindung mit Ende-zu-Ende-Verschlüsselung, sodass die über die Verbindung 101 ausgetauschten Daten weder von dem Nutzer-Computersystem 100 noch von anderen Teilnehmern des Netzwerks 116 entschlüsselt werden können. Das Attribut B, wie zum Beispiel die Fahrgestellnummer, wird von dem Dienst-Computersystem 150 über die Verbindung 103 aus dem ID-Token B gelesen.

Das Dienst-Computersystem 150 ermittelt mit Hilfe der Attribute A und des Attributs B das aktualisierte amtliche Kennzeichen des Kraftfahrzeugs, welches durch das Attribut B identifiziert wird. Beispielsweise ermittelt das Dienst-Computersystem 150 dieses neue amtliche Kennzeichen durch eine Datenbankabfrage in einer Datenbank, in der solche Kennzeichen gespeichert sind. Für die Datenbankabfrage können die Attribute A und/oder das Attribut B verwendet werden.

Das Dienst-Computersystem 150 sendet Daten, welche das neue amtliche Kennzeichen beinhalten, über die Verbindung 103 an den ID-Token B, sodass das neue amtliche Kennzeichen dort gespeichert wird. Zusätzlich kann das Dienst-Computersystem 150 auch die aktualisierte Adresse des Nutzers auf diese Art und Weise in den ID-Token B schreiben.

Im Detail können Ausführungsformen des erfindungsgemäßen Systems wie folgt aufgebaut und eingerichtet sein:

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung des ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute A nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Die Programminstruktionen 131 dienen zur Durchführung eines Protokolls seitens des ID-Tokens 106. Beispielsweise kann es sich bei dem Protokoll um ein proprietäres oder standardisiertes Protokoll, insbesondere ein verbindungsorientiertes Protokoll, wie z.B. TCP, oder ein verbindungsloses Protokoll, wie z.B. UDP, handeln.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Die Schnittstelle 104 und ggf. das Lesegerät können so ausgebildet sein, dass gleichzeitig die Verbindungen 101 und 103 (vgl. Fig.1) aufrechterhalten werden können. Beispielsweise sind in dem. Lesegerät zwei Steckplätze für die ID-Token A und B vorgesehen oder es ist eine gleichzeitige Kommunikation mit den ID-Token A und B über einen RF Kanal möglich.

Die Schnittstelle 104 und ggf. das Lesegerät können aber auch so ausgebildet sein, dass die Verbindungen 101 und 103 (vgl. Fig.1) nicht gleichzeitig existieren können, sondern zu jedem Zeitpunkt nur eine dieser Verbindungen. Beispielsweise ist in dem Lesegerät nur ein Steckplatz für die ID-Token A und B vorgesehen. Nach dem Lesen der Attribute A aus dem ID-Token A wird der ID-Token A aus dem Lesegerät entfernt und dafür der ID-Token B eingeführt, um dann die Attribute B lesen zu können.

Der ID-Token B 107 ist in der hier betrachteten Ausführungsform prinzipiell gleich oder ähnlich aufgebaut wie der ID-Token A 106. Zur Beschreibung der einzelnen Komponenten des ID-Tokens B 107 wird daher auf die obige Beschreibung der Komponenten des ID-Tokens A 106 verwiesen. Im Unterschied zu dem ID Token A kann ein Schreibzugriff in den geschützten Speicherbereich 124' über die Verbindung B erfolgen, um die dort gespeicherten Attributwerte mit den Schreibdaten zu aktualisieren. Hiervon ausgenommen ist der Attributwert mit dem Unique Identifier, d.h. zum Beispiel der Fahrgestellnummer, welcher unveränderlich ist.

Die Programminstruktionen 130' und der Speicherbereich 120' können entfallen, falls für den ID-Token 107 keine Nutzerauthentifizierung vorgesehen ist.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Die Programminstruktionen 147 dienen zur Implementierung des Protokolls für die Kommunikation über das Netzwerk 116 und das Nutzer-Computersystem. Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Die Programminstruktionen 141 dienen zur Implementierung eines Soft-Token-Generators. Zur Generierung eines Soft-Tokens wird zunächst eine Zeitangabe mit Hilfe des Zeitgebers 151 des ID-Provider-Computersystems 136 ermittelt. Bei dieser Zeitangabe kann es sich um die aktuelle Uhrzeit handeln, die beispielsweise als UTC von dem Zeitgeber 151 ausgegeben wird. Bei der Zeitangabe kann es sich auch um eine Systemzeit handeln, insbesondere wenn der Zeitgeber 151 und ein entsprechender Zeitgeber 153 des Dienst-Computersystems 150 miteinander synchronisiert sind.

Das Dienst-Computersystem 150 kann zur Entgegennahme einer Dienst-Anforderung zur Initialisierung, insbesondere zur Aktualisierung des ID-Tokens B, ausgebildet sein.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seine Dienst-Anforderung eingeben kann.

Der Prozessor 154 dient ferner zur Ausführung von Programminstruktionen 155, durch die ein Soft-Token-Prüfmodul realisiert wird.

Das Dienst-Computersystem 150 hat ferner ein ID-Provider-Modul 157 zur Durchführung verschiedener kryptografischer Funktionen für den Aufbau der Verbindung 103, was analog zum Aufbau der Verbindung 101 erfolgt. Hinsichtlich der Komponenten des ID-Provider-Moduls 157 wird daher auf die entsprechenden Komponenten des ID-Provider-Computersystems 136 verwiesen. Das ID-Provider-Modul 157 kann einen integralen Bestandteil des Dienst-Computersystems 150 bilden, oder es kann sich um ein separates Computersystem handeln, welches mit dem Dienst-Computersystem 150 über eine lokale Verbindung gekoppelt ist.

Je nach der Art der Dienst-Anforderung muss das Dienst-Computersystem 150 ein oder mehrere Attribute des ID-Tokens 106 von dem ID-Provider Computersystem 136 empfangen, um die Dienst-Anforderung ausführen zu können.

Zur Inanspruchnahme des von dem Dienst-Computersystem 150 zur Verfügung gestellten Dienstes wird beispielsweise wie folgt vorgegangen:
1. Authentifizierung des Nutzers 102 gegenüber dem ID-Token 106.
   Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem ID-Token 106.
   Hierzu wird die Verbindung 101 zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung 101 an den ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.
3. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute A. Aufgrund eines entsprechenden Lesekommandos, welches das ID-Provider-Computersystem 136 über die Verbindung an den ID-Token 106 sendet, werden die angeforderten Attribute A aus dem geschützten Speicherbereich 124 ausgelesen und durch Ausführung der Programminstruktionen 132 verschlüsselt. Die verschlüsselten Attribute A werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.
4. Durch Ausführung der Programminstruktionen 141 wird dann der erste Soft-Token generiert. Dies erfolgt beispielsweise so, dass von dem Zeitgeber 151 die aktuelle Zeitangabe abgefragt wird. Bei dieser Zeitangabe kann es sich um eine absolute Zeit, beispielsweise die UTC, handeln. Zu dieser aktuellen Zeit wird ein Wert hinzuaddiert, der der verbleibenden Zeit bis zur geplanten Sendung des ersten Soft-Tokens von dem ID-Provider-Computersystem 136 über das Netzwerk 116 entspricht. Falls dieser Zeitraum kurz ist, kann dieser Schritt auch entfallen. Die Zeitangabe ist also zumindest näherungsweise der Sendezeitpunkt des ersten Soft-Tokens. Aus dieser Zeitangabe und den Attributen A, die aus dem ID-Token 106 ausgelesen worden sind, wird ein Datensatz erzeugt, der dann mit dem privaten Schlüssel 142 des ID-Provider-Computersystems 136 signiert wird, woraus der erste Soft-Token resultiert. Der erste Soft-Token wird dann von dem ID-Provider-Computersystem 136 entweder unmittelbar an das Dienst-Computersystem 150 gesendet oder mittelbar über das Nutzer-Computersystem 100, von wo aus der erste Soft-Token an das Dienst-Computersystem 150 weitergeleitet wird, wozu je nach Ausführungsform das Einverständnis des Nutzers 102 erforderlich ist.

Das Dienst-Computersystem 150 kann die Vertrauenswürdigkeit der in dem ersten Soft-Token beinhalteten Attribute A prüfen, wozu die Programminstruktionen 155 ausgeführt werden. Durch Ausführung der Programminstruktionen 155 wird die Validität der Signatur des ersten Soft-Tokens geprüft. Ferner wird geprüft, ob sich der erste Soft-Token noch innerhalb seiner Gültigkeitszeitdauer befindet. Hierzu wird von dem Zeitgeber 153 die aktuelle Zeit abgefragt. Dies erfolgt beispielsweise unmittelbar beim Empfang des ersten Soft-Tokens, sodass es sich bei dieser Zeitangabe zumindest näherungsweise um die Empfangszeit handelt. Die Empfangszeit wird dann mit der Zeitangabe des ersten Soft-Tokens, d.h. der Sendezeit, verglichen, indem die Differenz zwischen beiden Zeiten gebildet wird. Wenn die Differenz kleiner als ein vorgegebener Schwellwert ist, so befindet sich der erste Soft-Token innerhalb seiner Gültigkeitsdauer. Beide Bedingungen, d.h. die Validität der Signatur des Soft-Tokens und der Empfang des Soft-Tokens innerhalb dessen Gültigkeitsdauer, müssen erfüllt sein, damit das Dienst-Computersystem 150 die weiteren Verarbeitungsschritte durchführen kann.

Durch den Empfang des ersten Soft Tokens wird das Dienst-Computersystem 150 über die aus dem ID-Token 106 ausgelesenen Attribute A in Kenntnis gesetzt. Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Außerdem besteht auch Sicherheit darüber, dass der erste Soft-Token tatsächlich von dem ID-Provider-Computersystem 136 empfangen worden ist und nicht etwa eine Replay-Attacke vorliegt, wenn der erste Soft-Token innerhalb seiner Gültigkeitsdauer empfangen worden ist.
5. Zur Übertragung zumindest eines Attributs B an das Dienst-Computersystem 150 wird analog zu den o.g. Schritte 1 bis 3 vorgegangen, um die Verbindung 103 aufzubauen: Zunächst muss sich der Nutzer 102 gegenüber dem ID-Token 107 authentifizieren. Dieser Authentifizierungsschritt kann auch entfallen, wenn davon ausgegangen wird, dass der ID-Token 107 nur dem Kraftfahrzeug 172 und nicht dem Nutzer 102 fest zugeordnet ist, wie das bei einem Kraftfahrzeugbrief beispielsweise der Fall ist. Das ID-Provider-Modul 157 authentifiziert sich gegenüber dem ID-Token 107, wozu die Verbindung 103 zwischen dem Dienst-Computersystem 105 und dem ID-Token 107 über das Nutzer-Computersystem 100 hergestellt wird. Beispielsweise überträgt das ID-Provider-Modul 157 sein Zertifikat 144' über diese Verbindung 103 an den ID-Token 107. Durch die Programminstruktionen 134' wird dann eine sogenannte Challenge generiert, d.h. beispielsweise eine Zufallszahl. Diese Zufallszahl wird mit dem in dem Zertifikat 144' beinhalteten öffentlichen Schlüssel des ID-Provider-Moduls 157 verschlüsselt. Das resultierende Chiffrat wird dann von dem ID-Token 107 über die Verbindung 103 an das ID-Provider-Modul 157 gesendet. Das ID-Provider-Modul 157 entschlüsselt das Chiffrat mit Hilfe seines privaten Schlüssels 142' und erhält so die Zufallszahl. Das ID-Provider-Modul 157 sendet diese Zufallszahl über die Verbindung 103 an den ID-Token 107 zurück. Durch Ausführung der Programminstruktionen 134' wird dort geprüft, ob die von dem ID-Provider-Modul 157 empfangene Zufallszahl mit der ursprünglich generierten Zufallszahl, d.h. der Challenge, übereinstimmt. Ist dies der Fall, so gilt das ID-Provider-Modul 157 als gegenüber dem ID-Token 107 authentifiziert. Die Zufallszahl kann als symmetrischer Schlüssel für die Ende-zu-Ende-Verschlüsselung verwendet werden. Das ID-Provider-Modul 157 erhält dann eine Leseberechtigung zum Auslesen eines, mehrerer oder aller der in dem geschützten Speicherbereich 124' des ID-Tokens 107 gespeicherten Attribute B. Aufgrund eines entsprechenden Lesekommandos, welches das ID-Provider-Modul 157 über die Verbindung 103 an den ID-Token 107 sendet, werden die angeforderten Attribute B aus dem geschützten Speicherbereich 124' ausgelesen und durch Ausführung der Programminstruktionen 132' verschlüsselt. Die verschlüsselten Attribute B werden über die Verbindung 103 an das ID-Provider-Modul 157 übertragen und dort durch Ausführung der Programminstruktionen 148' entschlüsselt. Dadurch erhält das ID-Provider-Modul 157 Kenntnis der aus dem ID-Token 107 ausgelesenen Attribute B.

Im Ergebnis hat das Dienst-Computersystem 150 dann die Attribute A und B auf sichere und vertrauenswürdige Art empfangen.
6. Mit Hilfe der Attribute A und B ermittelt das Dienst-Computersystem dann die Daten, die in den ID-Token B zum Beispiel zur Aktualisierung oder Initialisierung von einem der in dem geschützten Bereich 124' gespeicherten Attributwerte dienen sollen. Wenn der ID-Token B zum Beispiel einem Kraftfahrzeug 172 zugeordnet ist und es sich bei dem Dienst-Computersystem 150 um eine Online-Kfz-Meldebehörde handelt, kann das Dienst-Computersystem das aktuelle amtliche Kennzeichen des Kraftfahrzeugs 172 ermitteln, indem es mit Hilfe der Attribute A und/oder B auf eine Datenbank 174 zugreift, welche mit dem Dienst-Computersystem 150 verbunden ist. Dies kann so erfolgen, dass durch Ausführung der Programminstruktionen 156 mit Hilfe der Attribute A und/oder B eine Datenbankabfrage der Datenbank 174 durchgeführt wird, um das dort gespeicherte aktuelle Kfz-Kennzeichen abzurufen. Das Dienst-Computersystem signiert dann die Daten mit Hilfe des ID-Provider Moduls 157 und sendet die signierten Daten über die Verbindung 103 mit einem Schreibkommando an den ID-Token 107, beispielsweise um den Attributwert des amtlichen Kennzeichens, der in dem geschützten Speicherbereich 124' des ID-Tokens B gespeichert ist, zu aktualisieren. Vorzugsweise prüft der ID-Token 107 die hierfür erforderliche Schreibberechtigung des ID-Provider Moduls 157 und zwar anhand des Zertifikats 144'.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung der ID-Token 106 und 107 für zum Beispiel E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

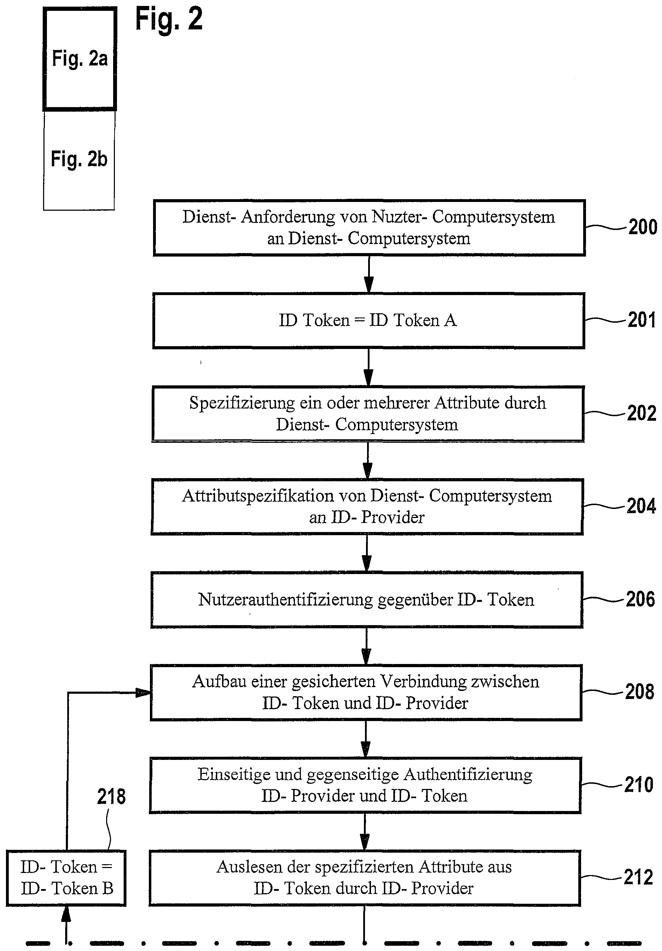

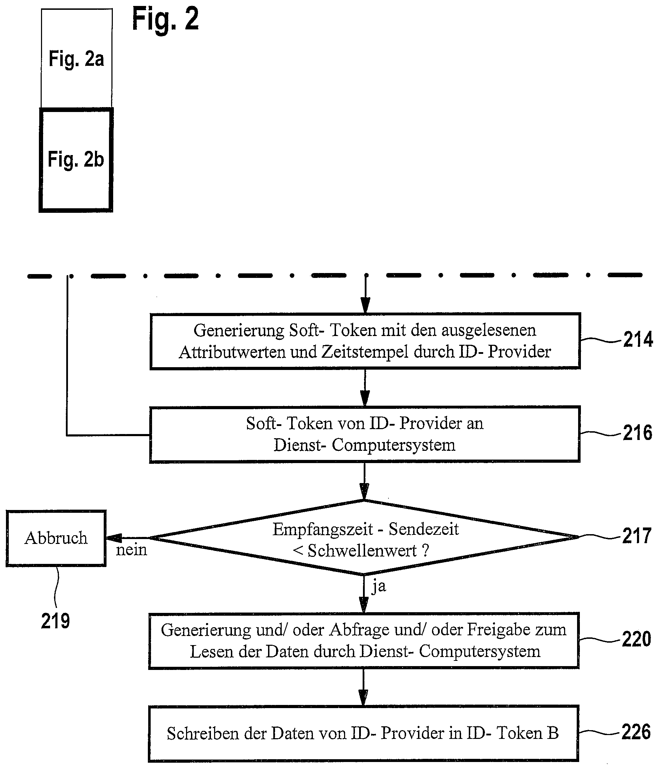

Die Figur 2 zeigt eine Ausführungsform eines erfindungsgemäßen Verfahrens. In dem Schritt 200 wird eine Dienst-Anforderung von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, zum Beispiel zur Aktualisierung seines ID-Tokens B.

Für diese Aktualisierung ist es erforderlich, dass zunächst zwischen dem ID-Token A und dem ID-Provider (vgl. ID-Provider Computersystem 136 in der Ausführungsform der Fig. 1) eine Verbindung A und dann zwischen dem ID-Token B und dem ID-Provider Modul des Dienst-Computersystems eine Verbindung B aufgebaut wird.

In der hier betrachteten Ausführungsform erfolgt der Aufbau der Verbindungen A und B also sequenziell, wobei beispielsweise zunächst die Verbindung A aufgebaut wird. Hierzu wird in dem Schritt 201 das aktuell verwendete ID-Token gleich dem ID-Token A gesetzt.

In dem Schritt 202 spezifiziert das Dienst-Computersystem 150 daraufhin ein oder mehrere Attribute, welche es benötigt, um die Berechtigung des Nutzers für die Dienst-Anforderung zu prüfen. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden.

In dem Schritt 204 wird die Attributspezifikation, d.h. die in dem Schritt 202 erfolgte Spezifizierung der ein oder mehreren der Attribute, von dem Dienst-Computersystem an das ID-Provider-Computersystem übertragen, und zwar entweder direkt oder über das Nutzer-Computersystem.

Um dem ID-Provider-Computersystem die Möglichkeit zu geben, Attribute aus seinem ID-Token auszulesen, authentifiziert sich der Nutzer in dem Schritt 206 gegenüber dem ID-Token.

In dem Schritt 208 wird eine Verbindung zwischen dem ID-Token und dem ID-Provider-Computersystem aufgebaut. Hierbei handelt es sich vorzugsweise um eine gesicherte Verbindung, beispielsweise nach einem so genannten Secure Messaging-Verfahren.

In dem Schritt 210 erfolgt zumindest eine Authentifizierung des ID-Provider-Computersystems gegenüber dem ID-Token über die in dem Schritt 208 aufgebaute Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, erhält das ID-Provider-Computersystem von dem ID-Token die Zugriffsberechtigung zum Auslesen der Attribute. In dem Schritt 212 sendet das ID-Provider-Computersystem ein oder mehrere Lesekommandos zum Auslesen der gemäß Attributspezifikation erforderlichen Attribute aus dem ID-Token. Die Attribute werden dann mittels Ende-zu-Ende-Verschlüsselung über die gesicherte Verbindung an das ID-Provider-Computersystem übertragen und dort entschlüsselt.

In dem Schritt 214 generiert das ID-Provider-Computersystem den ersten Soft-Token. Dies kann so erfolgen, dass zunächst eine Zeitangabe ermittelt wird. Durch die Zeitangabe kann der Sendezeitpunkt für die Versendung des ersten Soft-Tokens oder dessen maximale Gültigkeitsdauer spezifiziert sein. Der erste Soft-Token wird generiert, indem die in dem vorausgegangenen Schritt 212 ausgelesenen Attributwerte und die Zeitangabe zu einem Datensatz zusammengefasst und signiert werden. In dem Schritt 216 sendet das ID-Provider-Computersystem den ersten Soft-Token über das Netzwerk an das Dienst-Computersystem. Der erste Soft-Token erreicht das Dienst-Computersystem entweder direkt oder über das Nutzer-Computersystem.

Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Dienst-Computersystem weitergeleitet werden. Hierdurch ist größtmögliche Transparenz für den Nutzer hinsichtlich der von dem ID-Provider-Computersystem an das Dienst-Computersystem gesendeten Attribute hergestellt.

Danach wird in dem Schritt 218 der aktuell verarbeitete ID-Token gleich den ID-Token B gesetzt und die Ablaufsteuerung geht zu dem Schritt 208 zurück, der dann aber bezüglich des ID-Provider Moduls der Dienst-Computersystems durchgeführt wird. Die nachfolgenden Schritte 210 und 212 werden im zweiten Durchgang ebenfalls bezüglich des ID-Provider-Moduls durchgeführt.

In dem Schritt 214 kann das ID-Provider-Modul einen zweiten Soft-Token generieren, der prinzipiell gleich wie der erste Soft-Token aufgebaut ist. Der zweite Soft-Token wird durch Signierung eines Datensatzes generiert, welcher die Attribute B und eine Zeitangabe beinhaltet. Diese Zeitangabe ist beispielsweise wiederum eine Spezifizierung der Sendezeit des zweiten Soft-Tokens von dem Dienst-Computersystem an das Nutzer-Computersystem oder die Spezifizierung einer maximalen Gültigkeit. In dem Schritt 216 wird der zweite Soft-Token von dem ID-Provider-Modul 157 über das Netzwerk 116 an das Nutzer-Computersystem gesendet, von wo aus der zweite Soft-Token nach Genehmigung durch den Nutzer 102 an das Dienst-Computersystem zurückgesendet wird. Auf diese Art und Weise hat der Nutzer auch bezüglich der Attribute B eine Kontrollmöglichkeit.

In einer alternativen Ausführungsform können die Schritte 214 und 216 in dem zweiten Durchgang aber auch entfallen.

Nachdem das Dienst-Computersystem die Attribute A und B empfangen hat, wird in dem Schritt 217 von dem Dienst-Computersystem geprüft, ob der erste Soft-Token während seiner Gültigkeit von dem Dienst-Computersystem empfangen worden ist. Hierzu kann so vorgegangen werden, dass das Dienst-Computersystem den ersten Soft-Token bei seinem Empfang mit einem Zeitstempel versieht. Dieser Zeitstempel, d.h. die Empfangszeit, wird mit der Zeitangabe des ersten Soft-Tokens, d.h. der Sendezeit, verglichen, indem die Differenz gebildet wird. Wenn diese Differenz größer als ein vorgegebener Schwellwert ist, so wird der Vorgang in dem Schritt 219 abgebrochen. Im gegenteiligen Fall wird danach der Schritt 220 ausgeführt.

Bei einer Ausführungsform mit zweitem Soft-Token wird die Prüfung in dem Schritt 217 vorzugsweise auch bezüglich des zweiten Soft-Tokens durchgeführt, wobei hier die Differenz zwischen der Sendezeit des zweiten Soft-Tokens von dem Dienst-Computersystem und der Empfangszeit des Empfangs des zweiten Soft-Tokens von dem Nutzer-Computersystem durch das Dienst-Computersystem berechnet und mit dem vorgegebenen Schwellwert verglichen wird.

In dem Schritt 220 ermittelt dann das Dienst-Computersystem anhand der Attribute A und/oder B die Daten für die Aktualisierung oder Initialisierung des ID-Tokens B. Dies kann so erfolgen, dass das Dienst-Computersystem diese Daten generiert, aus einer Datenbank abfragt oder die Datenbank zum Zugriff durch das ID-Provider-Computersystem zum Auslesen dieser Daten über das Netzwerk freigibt.

Anschließend schreibt das ID-Provider-Modul die Daten in dem Schritt 226 in den ID-Token B über die Verbindung B. Hierzu kann es erforderlich sein, dass die Verbindung B erneut aufgebaut wird.

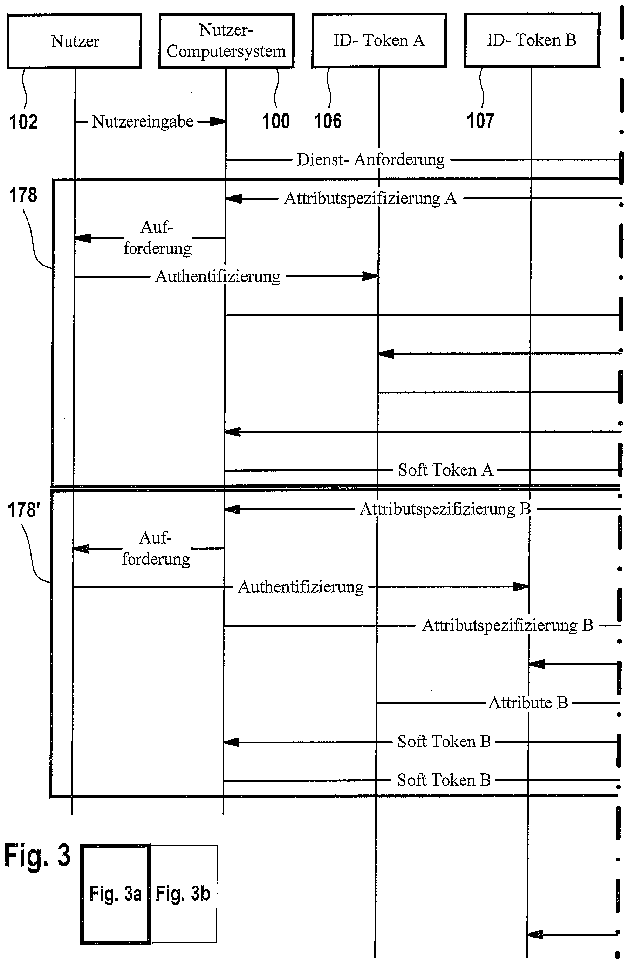

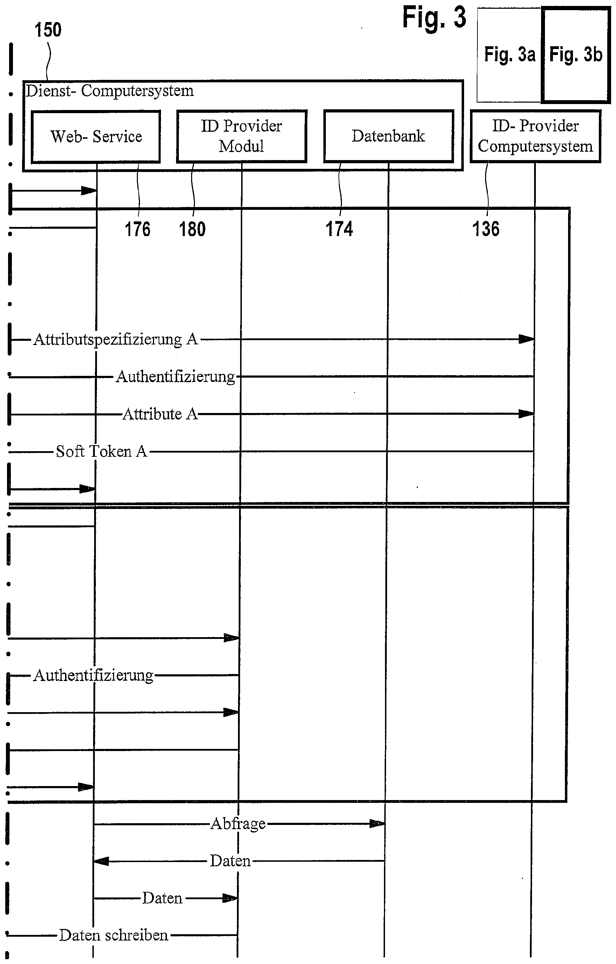

Die Figur 3 zeigt eine weitere Ausführungsform eines erfindungsgemäßen Verfahrens. Durch eine Nutzereingabe eines Nutzers 102 in ein Nutzer-Computersystem 100 spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines der dort angebotenen Dienste. Die Dienst-Anforderung des Nutzers 102 wird von dem Nutzer-Computersystem 100 an das Dienst-Computersystem 150 übertragen.

Beispielsweise beinhaltet das Dienst-Computersystem 150 einen Web Service 176, insbesondere nach einer von W3C spezifizierten Web Services Architecture. Der Web Service 176 dient als Schnittstelle des Dienst-Computersystem 150 gegenüber dem Nutzer-Computersystem 100 und/oder dem ID-Provider Computersystem 136.

Das Dienst-Computersystem 150 antwortet auf die Dienst-Anforderung mit einer Attributspezifizierung A, d.h. beispielsweise einer Liste von Attributnamen der erforderlichen Attribute A. Nach Empfang der Attributspezifizierung A fordert das Nutzer-Computersystem 100 den Nutzer 102, beispielsweise durch eine Eingabeaufforderung, zur Authentifizierung gegenüber dem ID-Token 106 auf.

Der Nutzer 102 authentifiziert sich daraufhin gegenüber dem ID-Token 106, beispielsweise durch Eingabe seiner PIN. Nach erfolgreicher Authentifizierung wird die Attributspezifizierung A von dem Nutzer-Computersystem 100 an ein ID-Provider-Computersystem 136 weitergeleitet. Hierzu wird die Verbindung A aufgebaut. Das ID-Provider-Computersystem 136 authentifiziert sich gegenüber dem ID-Token 106 und richtet eine Leseanforderung zum Lesen der Attribute A gemäß der Attributspezifizierung A an den ID-Token 106.

Unter der Voraussetzung der vorherigen erfolgreichen Authentifizierung des Nutzers 102 und des ID-Provider-Computersystems 136 antwortet der ID-Token 106 auf die Leseanforderung mit den gewünschten Attributen A. Das ID-Provider-Computersystem 136 generiert darauf hin den ersten Soft Token A mit den Attributen A und einer Zeitangabe, z.B. des Sendezeitpunkts des ersten Soft Tokens oder der Gültigkeitsdauer. Das ID-Provider-Computersystem 136 sendet dann den ersten Soft-Token an das Nutzer-Computersystem 100. Nach Freigabe durch den Nutzer 102 wird der erste Soft Token dann an das Dienst-Computersystem 150 übertragen. Das Dienst-Computersystem 150 kann dann die Validität der Signatur des ersten Soft-Token prüfen und ob der erste Soft-Token innerhalb seiner Gültigkeit von dem Dienst-Computersystem 150 empfangen worden ist. Nach Durchführung dieser Teilsequenz 178 hat das Dienst-Computersystem 150 dann also die Attribute A empfangen.

Die nachfolgende Teilsequenz 178' zum Lesen der Attribute B kann in analoger Art und Weise durchgeführt werden:

Das Dienst-Computersystem 150 antwortet auf den Empfang der Attribute A mit einer Attributspezifizierung B, d.h. beispielsweise einer Liste von Attributnamen der erforderlichen Attribute B. Nach Empfang der Attributspezifizierung B fordert das Nutzer-Computersystem 100 den Nutzer 102, beispielsweise durch eine Eingabeaufforderung, zur Authentifizierung gegenüber dem ID-Token 107 auf. Die Authentifizierung des Nutzers 102 gegenüber dem ID-Token 107 kann aber auch entfallen, wenn man davon ausgeht, dass der ID-Token 107 dem Kraftfahrzeug 172 und nicht primär dem Nutzer 102 zugeordnet ist.

Die Attributspezifizierung B wird von dem Nutzer-Computersystem 100 über den Web Service 176 an das ID-Provider Modul 180 weitergeleitet. Hierzu wird die Verbindung B aufgebaut. Das ID-Provider Modul 180 authentifiziert sich gegenüber dem ID-Token 107 und richtet eine Leseanforderung zum Lesen der Attribute B gemäß der Attributspezifizierung B an den ID-Token 107.

Der ID-Token 107 antwortet auf die Leseanforderung mit den gewünschten Attributen B. Das ID-Provider Modul 180 generiert darauf hin den zweiten Soft Token B mit den Attributen B und einer Zeitangabe, z.B. des Sendezeitpunkts des zweiten Soft Tokens oder der Gültigkeitsdauer. Das ID-Provider Modul 180 sendet dann den zweiten Soft-Token an das Nutzer-Computersystem 100. Nach Freigabe durch den Nutzer 102 wird der zweite Soft Token dann an das Dienst-Computersystem 150 übertragen.

Das Dienst-Computersystem 150 kann dann die Validität der Signatur des zweiten Soft-Token prüfen und ob der zweite Soft-Token innerhalb seiner Gültigkeit von dem Dienst-Computersystem 150 empfangen worden ist. Nach Durchführung dieser Teilsequenz 178' hat das Dienst-Computersystem 150 dann also auch die Attribute B empfangen.

Das Dienst-Computersystem 150 verwendet dann die Attribute A und/oder B zur Ermittlung der aktualisierten oder initialen Attributwerte zum Schreiben in den ID-Token B.

Dies kann so erfolgen, dass mit Hilfe der Attribute A und/oder B eine Datenbankabfrage der Datenbank 174 durchgeführt wird. Die in der Datenbank 174 durch die Datenbankabfrage identifizierten Datenbankeinträge, die die in den ID-Token B zu schreibenden Daten beinhalten, werden zur Generierung eines Datensatzes verwendet. Der Datensatz kann insbesondere auch Attribute A beinhalten. Dieser Datensatz wird dann über die Verbindung B in den ID-Token 107 geschrieben.

Vorzugsweise wird der Datensatz in Form eines dritten Soft-Tokens von dem Dienst-Computersystem 150 an den ID-Token B gesendet.

Der dritte Soft-Token kann neben dem Datensatz wiederum eine Zeitangabe beinhalten, so wie das auch für die ersten und zweiten Soft-Token der Fall ist. Bei der Zeitangabe kann es sich um die Spezifizierung einer Sendezeit oder einer Gültigkeitsdauer des dritten Soft-Tokens handeln. Der ID-Token B kann die Validität der Signatur des dritten Soft-Tokens prüfen und, ob der dritte Soft-Token noch gültig ist, d.h. je nach Ausführungsform, ob der dritte Soft-Token von dem ID-Token B zu einem Empfangszeitpunkt empfangen worden ist, der nicht mehr als einen vorgegebenen Schwellwert von dem Sendezeitpunkt beabstandet ist, oder ob der dritte Soft-Token innerhalb seiner spezifizierten Gültigkeitsdauer von dem ID-Token B empfangen worden ist. Nachdem diese Prüfungen von dem ID-Token B erfolgreich durchgeführt worden sind, akzeptiert der ID-Token B den dritten Soft-Token und der mit dem dritten Soft-Token empfangene Datensatz wird in den Speicherbereich 124' (vgl. Figur 1) des ID-Tokens B geschrieben, um die dort gespeicherten Attributwerte zu aktualisieren oder zu initialisieren.

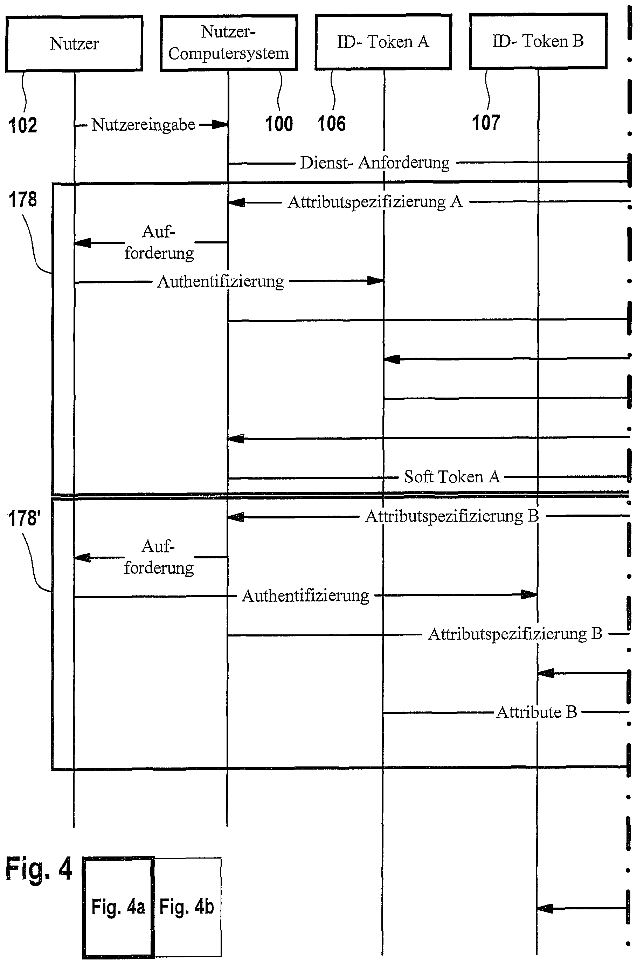

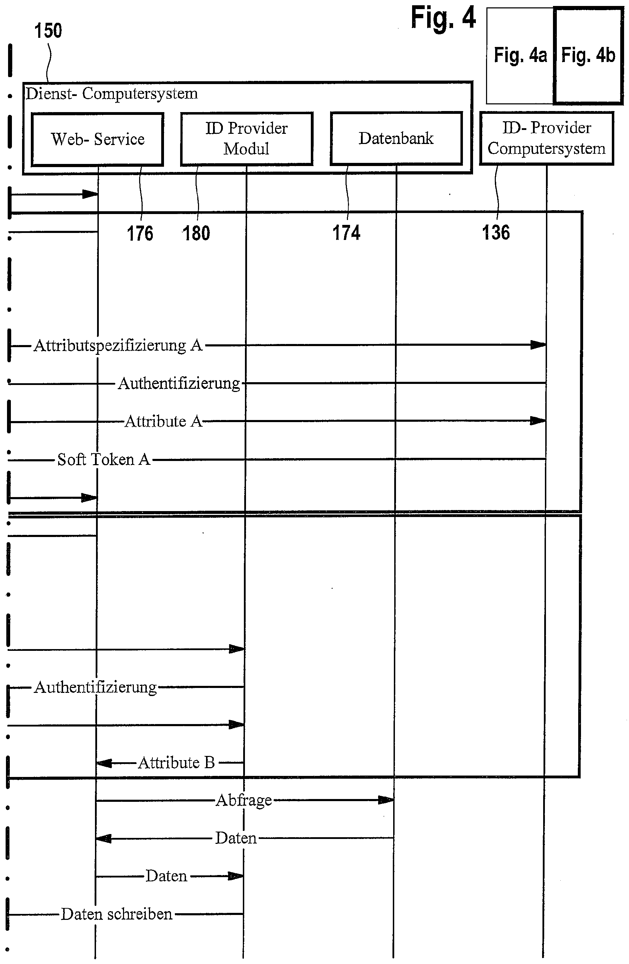

Die Figur 4 zeigt eine alternative Ausführungsform. Die Teilsequenz 178 kann identisch ausgebildet sein wie in der Ausführungsform der Figur 3. Die Teilsequenz 178' unterscheidet sich von der Teilsequenz 178' in der Ausführungsform der Figur 3 dadurch, dass kein zweiter Soft-Token B generiert wird, sondern dass, nachdem das ID-Provider-Modul 180 die Attribute B empfangen hat, diese unmittelbar an den Webservice 176 innerhalb des Dienst-Computersystems 150 kommuniziert werden.

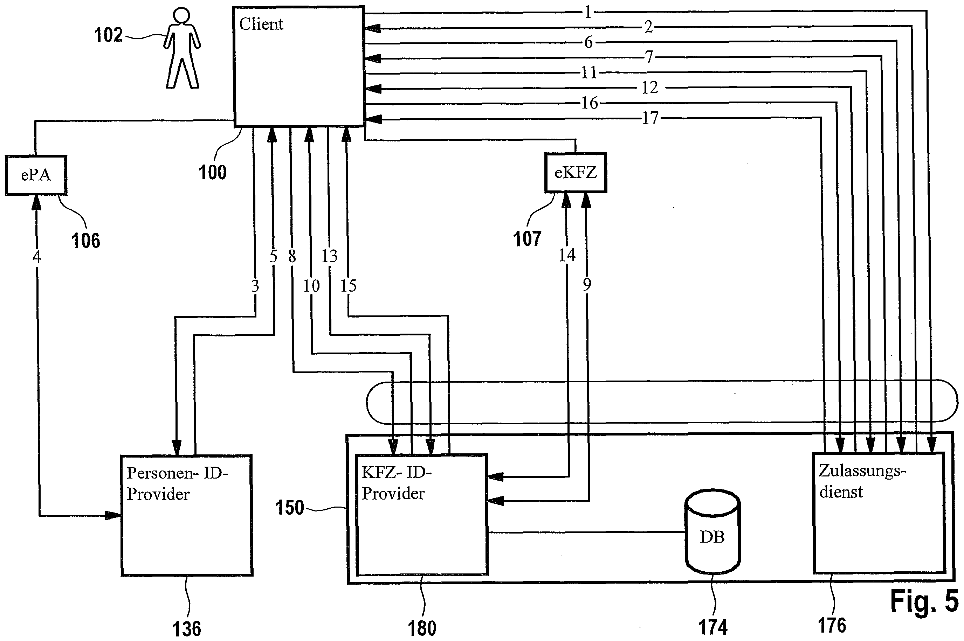

In der Ausführungsform der Figur 5 ist das Nutzer-Computersystem 100 als Client-Computer ausgebildet. Bei dem ID-Token A 106 handelt es sich hier um einen elektronischen Personalausweis "ePA". Bei dem ID-Token B 107 handelt es sich um ein elektronisches Kraftfahrzeugdokument, wie zum Beispiel einen elektronischen Fahrzeugbrief oder einen elektronischen Fahrzeugschein "eKFZ". Der Webservice 176 ist hier als Zulassungsdienst ausgebildet, d.h. der Webservice stellt verschiedene Dienste für die Online-Anmeldung oder Ummeldung von Kraftfahrzeugen zur Verfügung. Der Webservice 176 und das ID-Provider-Modul 180, d.h. der "KFZ-ID-Provider" sowie auch die Datenbank 174 gehören zu demselben Dienst-Computersystem 150.

Zur Aktualisierung des ID-Tokens 107, zum Beispiel mit einem neuen amtlichen Kennzeichen, wird wie folgt vorgegangen:
1. Der Nutzer 102 ruft von seinem Nutzer-Computersystem 100 mit Hilfe einer Dienstanforderung einen von dem Webservice 176 zur Verfügung gestellten Dienst auf.
2. Der Webservice 176 antwortet auf diese Dienstanforderung mit einer Authentifizierungsanfrage, d.h. der Webservice 106 spezifiziert diejenigen Attribute A mit Hilfe einer Attributspezifizierung A, welche er bezüglich des Nutzers 102 benötigt. Diese Authentifizierungsanfrage wird von dem Webservice176 an das Nutzer-Computersystem 100 gesendet. Außerdem sendet der Webservice 176 an das Nutzer-Computersystem 100 eine Information, wonach nach dem Auslesen der Attribute A und deren Übertragung an den ID-Provider 136 die Verbindung A abgebrochen werden kann.
3. Von dem Nutzer-Computersystem 100 wird eine Anfrage zur Benutzer-ID-Betätigung an den ID-Provider 136 gesendet. Diese Anfrage beinhaltet die Attributspezifizierung A, d.h. eine Spezifizierung der Attribute A, die aus dem ID-Token 106 ausgelesen werden sollen. Ferner wird von dem Nutzer-Computersystem 100 an das ID-Provider-Computersystem 136 die Information gesendet, wonach die mit dem ID-Token 106 aufzubauende Verbindung A nach Abfrage der Attribute A aus dem ID-Token 106 abgebrochen werden soll.
4. Zwischen dem ID-Provider-Computersystem 136 und dem ID-Token 106 wird dann die Verbindung A aufgebaut und das ID-Provider-Computersystem 136 liest die Attribute A aus dem ID-Token A aus. Nach dem Auslesen der Attribute A wird die Verbindung abgebrochen.
5. Das ID-Provider-Computersystem 136 sendet die Attribute A an das Nutzer-Computersystem 100 als Antwort auf die Anfrage Schritts 3.
6. Das Nutzer-Computersystem 100 sendet die Attribute A an den Webservice 176 als Antwort auf die Authentifizierungsanfrage des Schritts 2.
7. Der Webservice 176 sendet eine Authentifizierungsanfrage bezüglich der Attribute B an das Nutzer-Computersystem 100, d.h. bezüglich solcher Attribute B, die in dem ID-Token 107 gespeichert sind. Die Authentifizierungsanfrage beinhaltet also eine Attributspezifizierung der Attribute B.
8. Das Nutzer-Computersystem 100 sendet eine Anfrage für eine Kraftfahrzeug-ID-Bestätigung an das ID-Provider-Modul 180, d.h. eine Anfrage zur Lieferung der Attribute B, so wie sie in der mit der Authentifizierungsanfrage des Schritts 7 empfangenen Attributspezifizierung B spezifiziert sind.
9. Das ID-Provider-Modul 180 baut die Verbindung B mit dem ID-Token 107 auf und liest hierüber die Attribute B aus. Nach dem Auslesen der Attribute B kann die Verbindung B je nach Ausführungsform bestehen bleiben oder getrennt werden.
10. Als Antwort auf die Anfrage des Schritts 8 sendet das ID-Provider-Modul 180 an das Nutzer-Computersystem 100 die Attribute B.
11. Als Antwort auf die Authentifizierungsanfrage des Schritts 7 sendet das Nutzer-Computersystem 100 die Attribute B an den Webservice 176.
12. Der Webservice 176 generiert einen Soft-Token mit zumindest den Attributen B oder den Attributen A und B und einer Zeitangabe, wie zum Beispiel der Sendezeit oder einer Gültigkeitsdauer. Dieser Soft-Token wird von dem Webservice 176 an das Nutzer-Computersystem 100 gesendet.
13. Nach Freigabe durch den Nutzer wird der Soft-Token von dem Nutzer-Computersystem 100 an das ID-Provider-Modul 180 weitergeleitet.
14. Das ID-Provider-Modul 180 prüft die Validität des Soft-Tokens hinsichtlich der Validität der Signatur und hinsichtlich des Empfangszeitpunkts des Soft-Tokens bei dem Dienst-Computersystem 150 anhand der in dem Soft-Token beinhalteten Zeitangabe. Wenn der Soft-Token in Ordnung ist, führt das ID-Provider-Modul 180 eine Datenbankabfrage in der Datenbank 174 durch, wobei die Attribute A und/oder B als Suchkriterien verwendet werden. Aus den durch die Datenbankabfrage ermittelten Daten, den Attributen A und/oder B generiert das ID-Provider-Modul 180 einen Datensatz, den das ID-Provider-Modul 180 über die Verbindung B in den ID-Token B schreibt.
15. In diesem Schritt erhält das Nutzer-Computersystem 100 eine Bestätigung von dem ID-Provider-Modul 180, wonach das Schreiben der Daten in den ID-Token B erfolgt ist.
16. Diese Bestätigung leitet das Nutzer-Computersystem 100 an den Webservice 176 weiter.

Die Kommunikation zwischen dem Dienst-Computersystem 150 und dem Nutzer-Computersystem 100 kann als SSL-Session mit starkem Schlüssel, zum Beispiel einem elliptische Kurven (EC)-Schlüssel, ausgeprägt sein.

### Bezugszeichenliste

- 100: Nutzer-Computersystem
- 101: Verbindung A
- 102: Nutzer
- 103: Verbindung B
- 104: Schnittstelle
- 106: ID-Token
- 107: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 131: Programminstruktionen
- 132: Programminstruktionen
- 134: Programminstruktionen
- 136: ID-Provider-Computersystem
- 138: Netzwerk-Schnittstelle
- 140: Speicher
- 141: Programminstruktionen
- 142: privater Schlüssel
- 144: Zertifikat
- 145: Prozessor
- 146: Programminstruktionen
- 147: Programminstruktionen
- 148: Programminstruktionen
- 149: Programminstruktionen
- 150: Dienst-Computersystem
- 151: Zeitgeber
- 152: Netzwerk-Schnittstelle
- 153: Zeitgeber
- 154: Prozessor
- 155: Programminstruktionen
- 156: Programminstruktionen
- 157: ID Provider Modul
- 172: Kraftfahrzeug
- 174: Datenbank
- 176: Webservice
- 178: Teilsequenz
- 180: Komponente

## Patentansprüche

1. Telekommunikationsverfahren mit folgenden Schritten:
- Aufbau einer ersten Verbindung (101) zwischen einem ersten ID-Token (106) und einem ersten Computersystem (136) über ein zweites Computersystem (100) zum Auslesen zumindest eines ersten Attributs aus dem ersten ID-Token,
- Generierung eines ersten Soft-Tokens, wobei der erste Soft-Token das zumindest eine erste Attribut und eine Zeitangabe beinhaltet, und wobei der erste Soft-Token von dem ersten Computersystem signiert ist,
- Senden des ersten Soft-Tokens von dem ersten Computersystem an ein drittes Computersystem (150),
wobei es sich bei der ersten Verbindung um eine Verbindung mit Ende-zu-Ende-Verschlüsselung handelt.

2. Verfahren nach Anspruch 1, wobei es sich bei der Zeitangabe um die Sendezeit des Sendens des ersten Soft-Tokens, den Zeitpunkt der Generierung des ersten Soft-Tokens oder eine Angabe der maximalen Gültigkeit des ersten Soft-Tokens handelt.

3. Verfahren nach Anspruch 1 oder 2, wobei es sich bei dem ersten ID-Token um ein Dokument, insbesondere ein Wert- oder Sicherheitsdokument, handelt.

4. Verfahren nach einem der vorhergehenden Ansprüche, wobei zum Aufbau der ersten Verbindung die folgenden Schritte durchgeführt werden:
- Authentifizierung eines Nutzers (102) gegenüber dem ersten ID-Token,
- Authentifizierung des ersten Computersystems gegenüber dem ersten ID-Token,
wobei nach erfolgreicher Authentifizierung des Nutzers und des ersten Computersystems gegenüber dem ersten ID-Token ein Lesezugriff des ersten Computersystems auf das zumindest erste Attribut in dem ersten ID-Token zur Übertragung des ersten Attributs mit dem ersten Soft-Token an das dritte Computersystem erfolgt, wobei die Authentifizierung des ersten Computersystem gegenüber dem ersten ID-Token vorzugsweise mit Hilfe eines Zertifikats (144) des ersten Computersystems erfolgt, wobei das Zertifikat eine Angabe derjenigen in dem ersten ID-Token gespeicherten Attribute beinhaltet, für welche das erste Computersystem für den Lesezugriff berechtigt ist, wobei der erste ID-Token die Leseberechtigung des ersten Computersystems für den Lesezugriff auf zumindest das erste Attribut vorzugsweise mit Hilfe des Zertifikats überprüft, und vorzugsweise mit folgenden weiteren Schritten:
- Senden einer Dienst-Anforderung von dem zweiten Computersystem an das dritte Computersystem,
- Spezifizierung des zumindest einen ersten Attributs durch das dritte Computersystem,
- Senden einer Attributspezifizierung zur Spezifizierung des ersten Attributs von dem dritten Computersystem an das erste Computersystem,
wobei der Lesezugriff des ersten Computersystems auf den ersten ID-Token erfolgt, um das in der Attributspezifizierung spezifizierte erste Attribut auszulesen, wobei die Dienst-Anforderung vorzugsweise einen Identifikator zur Identifizierung des ersten Computersystems beinhaltet, um das erste Computersystem auszuwählen.

5. Verfahren nach einem der vorhergehenden Ansprüche, wobei der erste Soft-Token von dem ersten Computersystem an das zweite Computersystem gesendet wird, von wo es nach Freigabe durch den Nutzer an das dritte Computersystem weitergeleitet wird.

6. Verfahren nach einem der vorhergehenden Ansprüche mit folgenden weiteren Schritten:
- Empfang des ersten Soft-Tokens zu einem Empfangszeitpunkt,
- Aufbau einer zweiten Verbindung (103) über ein zweites Computersystem (100) zu einem zweiten ID-Token (107) zum Auslesen zumindest eines zweiten Attributs aus dem zweiten ID-Token,
- Ermittlung von Daten mit Hilfe der ersten und/oder zweiten Attribute,
- Schreiben der Daten über die zweite Verbindung, um die Daten in dem zweiten ID-Token zu speichern,
wobei es sich bei der zweiten Verbindung um eine Verbindung mit Ende-zu-Ende-Verschlüsselung handelt, und wobei das Schreiben der Daten über die zweite Verbindung nur dann erfolgt, wenn der erste Soft-Token zu dem Empfangszeitpunkt gültig ist, wobei die Gültigkeit anhand der Zeitangabe geprüft wird.

7. Verfahren nach Anspruch 6, wobei die Gültigkeit geprüft wird, indem eine Differenz zwischen dem Empfangszeitpunkt und der in dem ersten Soft-Token beinhalteten Zeitangabe berechnet wird, und indem die Differenz mit einem Schwellwert verglichen wird.

8. Verfahren nach Anspruch 7, wobei der Schwellwert größer als eine mittlere Zeitdauer für die Übertragung des ersten Soft-Tokens von dem ersten Computersystem an das dritte Computersystem gewählt ist.

9. Verfahren nach Anspruch 6, 7 oder 8, wobei die zweite Verbindung zwischen dem zweiten ID-Token und einem kryptografischen Modul (157) des dritten Computersystems aufgebaut wird, wobei es sich bei dem zweiten ID-Token vorzugsweise um ein Dokument, insbesondere ein Wert- oder Sicherheitsdokument, handelt, wobei der zweite ID-Token vorzugsweise einer Sache (172), insbesondere einem Kraftfahrzeug, zugeordnet ist, wobei das zweite Attribut vorzugsweise die Sache eindeutig identifiziert.

10. Computerprogrammprodukt mit von einem Computersystem ausführbaren Instruktionen zur Durchführung eines Verfahrens nach einem der vorhergehenden Ansprüche.

11. Computersystem mit
- Mitteln (138) zum Aufbau einer ersten Verbindung (101) zu einem ersten ID-Token (106) über ein zweites Computersystem (100) zum Auslesen zumindest eines ersten Attributs aus dem ersten ID-Token,
- Mitteln (141) zur Generierung eines ersten Soft-Tokens, wobei der erste Soft-Token das zumindest eine erste Attribut und eine Zeitangabe beinhaltet,
- Mittel zum Signieren des ersten Soft-Tokens,
- Mitteln (138) zum Senden des ersten Soft-Tokens an ein drittes Computersystem (150).
wobei es sich bei der ersten Verbindung um eine Verbindung mit Ende-zu-Ende-Verschlüsselung handelt.

12. Computersystem nach Anspruch 11, wobei es sich bei der Zeitangabe um die Sendezeit des Sendens des ersten Soft-Tokens, den Zeitpunkt der Generierung des ersten Soft-Tokens oder eine Angabe der maximalen Gültigkeit des ersten Soft-Tokens handelt.

13. Computersystem nach einem der Ansprüche 11 oder 12, weiter mit
- Mitteln (152) zum Empfang des ersten Soft-Tokens zu einem Empfangszeitpunkt,
- Mitteln (157) zum Aufbau einer zweiten Verbindung (103) über ein zweites Computersystem (100) zu einem zweiten ID-Token (107) zum Auslesen zumindest eines zweiten Attributs aus dem zweiten ID-Token,
- Mitteln (174) zur Ermittlung von Daten mit Hilfe der ersten und/oder zweiten Attribute,
- Mitteln (157) zum Schreiben der Daten über die zweite Verbindung, um die Daten in dem zweiten ID-Token zu speichern,
wobei es sich bei der zweiten Verbindung um eine Verbindung mit Ende-zu-Ende-Verschlüsselung handelt, und wobei das Schreiben der Daten über die zweite Verbindung nur dann erfolgt, wenn der erste Soft-Token zu dem Empfangszeitpunkt gültig ist, wobei die Gültigkeit anhand der Zeitangabe geprüft wird.

14. Computersystem nach Anspruch 13, wobei die zweite Verbindung zwischen einem kryptografischen Modul (157) und dem zweiten ID-Token aufgebaut wird.

## Claims

1. A telecommunications method comprising the following steps:
- establishing a first connection (101) between a first ID token (106) and a first computer system (136) via a second computer system (100) for reading out at least one first attribute from the first ID token,
- generating a first soft token, wherein the first soft token includes the at least one first attribute and a time specification, and wherein the first soft token is signed by the first computer system,
- sending the first soft token from the first computer system to a third computer system (150),
wherein the first connection is a connection with end-to-end encryption.

2. The method according to claim 1, wherein the time specification is the time for the sending of the first soft token, the moment of the generation of the first soft token, or a specification of the maximum validity of the first soft token.

3. The method according to claim 1 or 2, wherein the first ID token is a document, in particular a document of value or a security document.

4. The method according to any one of the preceding claims, wherein the following steps are performed in order to establish the first connection:
- authenticating a user (102) to the first ID token,
- authenticating the first computer system to the first ID token,
wherein, following successful authentication of the user and of the first computer system to the first ID token, the first computer system is granted read access to the at least first attribute in the first ID token for the transfer of the first attribute with the first soft token to the third computer system, wherein the first computer system is authenticated to the first ID token preferably with the aid of a certificate (144) of the first computer system, wherein the certificate includes a specification of those attributes stored in the first ID token for which the first computer system is authorised for the read access, wherein the first ID token checks the read authorisation of the first computer system for the read access to at least the first attribute, preferably with the aid of the certificate, and preferably with the following further steps:
- sending a service request from the second computer system to the third computer system,
- specifying the at least one first attribute by the third computer system,
- sending an attribute specification for specifying the first attribute from the third computer system to the first computer system,
wherein the first computer system is granted read access to the first ID token in order to read out the first attribute specified in the attribute specification, wherein the service request preferably includes an identifier for identifying the first computer system in order to choose the first computer system.

5. The method according to any one of the preceding claims, wherein the first soft token is sent from the first computer system to the second computer system, where it is then forwarded on to the third computer system after release by the user.

6. The method according to any one of the preceding claims, comprising the following further steps:
- receiving the first soft token at a receiving time,
- establishing a second link (103) via a second computer system (100) to a second ID token (107) for reading out at least one second attribute from the second ID token,
- determining data with the aid of the first and/or second attributes,
- writing the data via the second connection so as to store the data in the second ID token,
wherein the second connection is a connection with end-to-end encryption, and wherein the data are written via the second connection only when the first soft token is valid at the receiving time, wherein the validity is checked on the basis of the time specification.

7. The method according to claim 6, wherein the validity is checked by calculating a difference between the receiving time and the time specification included in the first soft token, and by comparing the difference with a threshold value.

8. The method according to claim 7, wherein the threshold value is greater than a mean duration for the transfer of the first soft token from the first computer system to the third computer system.

9. The method according to claim 6, 7 or 8, wherein the second connection between the second ID token and a cryptographic module (157) of the third computer system, wherein the second ID token is preferably a document, in particular a document of value or a security document, wherein the second ID token is preferably associated with an object (172), in particular a motor vehicle, wherein the second attribute preferably identifies the object unambiguously.

10. A computer program product comprising instructions that can be executed by a computer system in order to carry out a method according to any one of the preceding claims.

11. A computer system comprising
- means (138) for establishing a first link (101) to a first ID token (106) via a second computer system (100) for reading out at least one first attribute from the first ID token,
- means (141) for generating a first soft token, wherein the first soft token includes the at least one first attribute and a time specification,
- means for signing the first soft token,
- means (138) for sending the first soft token to a third computer system (150),
wherein the first connection is a connection with end-to-end encryption.

12. The computer system according to claim 11, wherein the time specification is the time for sending the first soft token, the moment of generation of the first soft token, or a specification of the maximum validity of the first soft token.

13. The computer system according to any one of claims 11 or 12, further comprising
- means (152) for receiving the first soft token at a receiving time,
- means (157) for establishing a second connection (103) via a second computer system (100) to a second ID token (107) for reading out at least one second attribute from the second ID token,
- means (174) for determining data with the aid of the first and/or second attributes,
- means (157) for writing the data via the second connection in order to store the data in the second ID token,
wherein the second connection is a connection with end-to-end encryption, and wherein the data are written via the second connection only when the first soft token is valid at the receiving time, wherein the validity is checked on the basis of the time specification.

14. The computer system according to claim 13, wherein the second connection is established between a cryptographic module (157) and the second ID token.

## Revendications

1. Procédé de télécommunication avec les étapes suivantes :
- établissement d'une première liaison (101) entre un premier jeton d'identification (106) et un premier système informatique (136) par l'intermédiaire d'un deuxième système informatique (100) pour la lecture d'au moins un premier attribut à partir du premier jeton d'identification,
- génération d'un premier jeton de logiciel, où le premier jeton de logiciel contient l'au moins un premier attribut et une indication temporelle, et où le premier jeton de logiciel est signé par le premier système informatique,
- envoi du premier jeton de logiciel du premier système informatique vers un troisième système informatique (150),
où, dans le cas de la première liaison, il s'agit d'une liaison avec un codage de bout en bout.

2. Procédé selon la revendication 1, dans lequel, dans le cas de l'indication temporelle, il s'agit de l'instant d'envoi de l'envoi du premier jeton de logiciel, de l'instant de la génération du premier jeton de logiciel ou d'une indication d'une validité maximale du premier jeton de logiciel.

3. Procédé selon la revendication 1 ou 2, dans lequel, dans le cas du premier jeton d'identification, il s'agit d'un document, en particulier d'un document de valeur ou de sécurité.

4. Procédé selon l'une des revendications précédentes, dans lequel, pour l'établissement de la première liaison, les étapes suivantes sont réalisées :
- authentification d'un utilisateur (102) par rapport au premier jeton d'identification,
- authentification du premier système informatique par rapport au premier jeton d'identification,
dans lequel, après une authentification réussie de l'utilisateur et du premier système informatique par rapport au premier jeton d'identification, un accès en lecture du premier système informatique a lieu sur l'au moins un premier attribut dans le premier jeton d'identification pour la transmission du premier attribut avec un premier jeton de logiciel vers le troisième système informatique, où l'authentification du premier système informatique par rapport au premier jeton d'identification s'effectue de préférence à l'aide d'un certificat (144) du premier système informatique, où le certificat contient une indication des attributs en question stockés dans le premier jeton d'identification, pour lesquels le premier système informatique est habilité à avoir l'accès en lecture, où le premier jeton d'identification vérifie l'habilitation à l'accès en lecture du premier système informatique pour l'accès en lecture pour au moins le premier attribut de préférence avec l'aide du certificat, et de préférence avec les autres étapes suivantes :
- envoi d'une requête de service à partir du deuxième système informatique vers le troisième système informatique,
- définition de l'au moins un premier attribut par le troisième système informatique,
- envoi d'une définition d'attribut pour la définition du premier attribut à partir du troisième système informatique vers le premier système informatique,
dans lequel l'accès en lecture du premier système informatique est effectué par le premier jeton d'identification afin de lire le premier attribut défini dans la définition d'attribut, où la requête de service contient de préférence un identificateur pour l'identification du premier système informatique afin de choisir le premier système informatique.

5. Procédé selon l'une des revendications précédentes, dans lequel le premier jeton de logiciel est envoyé du premier système informatique vers le deuxième système informatique, à partir duquel il est transmis vers le troisième système informatique après la libération par l'utilisateur.

6. Procédé selon l'une des revendications précédentes avec les autres étapes suivantes :
- réception d'un premier jeton de logiciel à un instant de réception,
- établissement d'une deuxième liaison (103) par l'intermédiaire d'un deuxième système informatique (100) vers un deuxième jeton d'identification (107) pour la lecture d'au moins un deuxième attribut à partir du deuxième jeton d'identification,
- détermination de données à l'aide des premier et/ou deuxième attributs,
- écriture des données par l'intermédiaire d'une deuxième liaison afin de stocker les données dans le deuxième jeton d'identification,
où, dans le cas de la deuxième liaison, il s'agit d'une liaison avec un codage de bout en bout, et où l'écriture des données par l'intermédiaire de la deuxième liaison ne se produit que lorsque le premier jeton de logiciel est valable à l'instant de réception, où la validité est vérifiée à l'aide de l'indication temporelle.

7. Procédé selon la revendication 6, dans lequel la validité est vérifiée en ce qu'une différence entre un instant de réception et l'indication temporelle contenue dans le premier jeton de logiciel est calculée, et en ce que la différence est comparée avec une valeur de seuil.

8. Procédé selon la revendication 7, dans lequel la valeur de seuil est choisie sous la forme d'une durée moyenne pour la transmission du premier jeton de logiciel à partir du premier système informatique vers le troisième système informatique.

9. Procédé selon les revendications 6, 7 ou 8, dans lequel la deuxième liaison est établie entre le deuxième jeton d'identification et un module cryptographique (157) du troisième système informatique, où, dans le cas du deuxième jeton d'identification, il s'agit de préférence d'un document, notamment d'un document de valeur ou de sécurité, où le deuxième jeton d'identification est associé de préférence à une chose (172), de préférence un véhicule, où, de préférence, le deuxième attribut identifie clairement la chose.

10. Produit de programme informatique avec des instructions exécutables par un système informatique pour l'exécution d'un procédé selon l'une des revendications précédentes.

11. Système informatique avec
- des moyens (138) pour l'établissement d'une première liaison (101) vers un premier jeton d'identification (106) par l'intermédiaire d'un deuxième système informatique (100) pour la lecture d'au moins un premier attribut à partir du premier jeton d'identification,
- des moyens (141) pour la génération du premier jeton de logiciel, où le premier jeton de logiciel contient l'au moins un premier attribut et une indication temporelle,
- des moyens pour la signature du premier jeton de logiciel,
- des moyens (138) pour l'envoi du premier jeton de logiciel vers le troisième système informatique (150),
où, dans la première liaison, il s'agit d'une liaison avec un codage de bout en bout.

12. Système informatique selon la revendication 11, dans lequel, dans le cas de l'indication temporelle, il s'agit de l'instant d'envoi de l'envoi du premier jeton de logiciel, de l'instant de la génération du premier jeton de logiciel ou d'une indication de la validité maximale du premier jeton de logiciel.

13. Système informatique selon l'une des revendications 11 ou 12, avec en outre
- des moyens (152) pour la réception du premier jeton de logiciel à un instant de réception,
- des moyens (157) pour l'établissement d'une deuxième liaison (103) par l'intermédiaire d'un deuxième système informatique (100) vers un deuxième jeton d'identification (107) pour la lecture d'au moins un deuxième attribut à partir du deuxième jeton d'identification,
- des moyens (174) pour la détermination de données à l'aide des premier et/ou deuxième attributs,
- des moyens (157) pour l'écriture des données par l'intermédiaire de la deuxième liaison afin de stocker les données dans le deuxième jeton d'identification,
où, dans le cas de la deuxième liaison, il s'agit d'une liaison avec un codage de bout en bout, et où l'écriture des données est effectuée par l'intermédiaire de la deuxième liaison uniquement lorsque le premier jeton de logiciel est valable à l'instant de réception, où la validité est vérifiée à l'aide de l'indication temporelle.

14. Système informatique selon la revendication 13, dans lequel la deuxième liaison est construite entre un module cryptographique (157) et le deuxième jeton d'identification.
